# EUROPÄISCHE PATENTSCHRIFT

(11) **EP 0 554 309 B1**
(45) Veröffentlichungstag und Bekanntmachung des Hinweises auf die Patenterteilung: **04.01.1995**
(21) Anmeldenummer: 91918574.4
(22) Anmeldetag: 30.10.1991
(51) Int. Cl.: F16H 48/14, B60K 23/08

(54) **ANGETRIEBENE ACHSE**
DRIVEN AXLE
ESSIEU MENE

(30) Priorität: 02.11.1990 DE 4034884
(43) Veröffentlichungstag der Anmeldung: 11.08.1993
(73) Patentinhaber: ZAHNRADFABRIK FRIEDRICHSHAFEN AG, 88015 Friedrichshafen (DE)
(72) Erfinder: PAUL, Michael, D-8390 Passau (DE); WILKS, Eberhard, D-8391 Hutthurm (DE); MAMEROW, Bernd, D-2000 Hamburg 67 (DE)
(86) Internationale Anmeldenummer: EP9102054
(87) Internationale Veröffentlichungsnummer: WO9208069

(56) Entgegenhaltungen:
- EP-A- 0 182 312
- EP-A- 0 239 763
- US-A- 4 745 818
- US-A- 4 887 686

## Beschreibung

Die Erfindung betrifft eine angetriebene Achse mit zwei koaxial im Achsgehäuse gelagerten Abtriebswellen gemäß dem Oberbegriff des ersten Anspruches.

Fährt ein mehrspuriges Fahrzeug durch eine Kurve, so laufen die Räder einer Achse auf Bahnkurven unterschiedlicher Durchmesser. Da die kurvenäußeren Räder einen längeren Weg zurücklegen als die kurveninneren, haben diese unterschiedliche Drehzahlen, sofern zwischen dem Boden und den Rädern kein Schlupf auftritt. Werden nun die Räder gemeinsam angetrieben, sind Vorkehrungen zu treffen, die entsprechend unterschiedliche Drehzahlen an den Rädern gestatten, ohne daß es zu Verspannungen zwischen den Rädern untereinander und im Antriebsstrang kommt. Hierzu dienen Differentiale oder Kupplungen, die bei Kurvenfahrt den Antrieb zu den Rädern aufteilen oder unterbrechen.

In der EP-A 02 39 763 ist eine angetriebene Achse für Kraftfahrzeuge mit zwei Freilaufkupplungen beschrieben, die beide bei Geradeausfahrt die Leistung eines Motors auf die synchrondrehenden Räder übertragen. Während eines Fahrzustandes mit unterschiedlicher Bodenhaftung der Räder, wie z. B. mit einem Rad auf Eis und dem anderen Rad auf griffigem Untergrund, wird die Motorenleistung bei geschlossenen Kupplungen zu jedem der Räder im Verhältnis der Haftgrenzwerte übertragen, so daß optimale Traktionswerte erreicht werden.

Bei Kurvenfahrt unterbricht eine Freilaufkupplung den Antrieb zu einem Rad, und zwar bei Zugbetrieb zum schneller drehenden kurvenäußeren Rad. Die Freilaufkupplungen erlauben also Trennung der Räder oder starre Übertragungsfunktion, je nach Fahrzustand.

Eine Spreizvorrichtung enthält einen zylindrischen Bolzen als Stützelement und mit Nocken versehene Ringkolben. Die Ringkolben sind drehbar relativ zum Stützelement. Das mit dem Gehäuse der Freilaufkupplungen fest verbundene Stützelement dreht sich bei Lastwechsel im Antrieb relativ zu den Ringkolben und beaufschlagt die Ringkolben in axialer Richtung. Dreht im Zugbetrieb eines der Räder der Achse schneller als das gegenüberliegende Rad, dreht dessen Ringkolben relativ zum Stützelement in Antriebsrichtung voraus, so daß die Nocken von der Spreizvorrichtung freikommen und die geöffnete Kupplung die Verbindung zwischen Antrieb und schnellerem Rad unterbricht. Getrennt angeordnete Nocken sind auf den Ringkolben für Vor- und Rückwärtsfahrt vorgesehen.

Die Verdrehung in Fahrtrichtung des Ringkolbens der Kupplung, die zum schnelleren Rad führt, ist so zu begrenzen, daß dessen Nockenfläche für die entgegengesetzte Fahrtrichtung frei bleibt. Andernfalls könnte die Kupplung durch die Nockenfläche für die entgegengesetzte Fahrtrichtung wieder geschlossen werden und Verspannungen im Antriebsstrang entstehen.

In der obengenannten Schrift wird eine Klammer beschrieben, die den Verdrehspielraum der Ringkolben begrenzt. Bei Kurvenfahrt hält die Klammer den zum kurvenäußeren schnelleren Rad führenden Ringkolben in axialkraftfreier Mittelstellung, solange das Stützelement mit dem gegenüberliegenden Ringkolben dessen Kupplung geschlossen hält und das kurveninnere Rad mit dem Antrieb verbindet. Zwei Fahrzustände
- Kurvenfahrt mit einem voreilenden Rad und einem angetriebenen Rad einer Achse sowie
- Geradeausfahrt

sind für verspannungsfreien Betrieb vorgesehen. Landwirtschaftliche Kraftfahrzeuge erreichen Einschlagwinkel der gelenkten Räder größer 50 Grad.
Kurveninneres sowohl als auch kurvenäußeres gelenktes Rad einer Vorderachse laufen ab einem bestimmten Lenkeinschlag größer z. B. ca. 35 Grad auf Bahnkurven, die größer sind als die Bahnkurve der Mitte der Hinterachse. Ist das Kraftfahrzeug allradgetrieben, sind die Räder der gelenkten Vorderachse bei geeignetem Übersetzungsverhältnis zwischen Vorder- und Hinterachse ab dem bestimmten Lenkeinschlag im Schubbetrieb.

Ist eines der gelenkten Räder aufgrund seines großen Bahnradius im Schubbetrieb und bleibt dabei doch mit dem Antrieb starr verbunden, tritt bei erhöhter Belastung des Antriebs Schlupf an diesem Rad und an den Rädern, die noch im Zugbetrieb sind, auf.

Für verspannungsfreien Betrieb eines Allradantriebs bei Lenkeinschlag größer einem bestimmten Lenkeinschlag von z. B. ca. 35 Grad sollten daher beide gelenkten Räder einer angetriebenen Vorderachse frei laufen, um den Antrieb von zusätzlichen Belastungen freizuhalten und das Kraftfahrzeug bei verbessertem Wirkungsgrad zu betreiben.

Aufgabe der vorliegenden Erfindung ist es, eine angetriebene Achse mit zwei Freilaufkupplungen zu schaffen, die vom Zugbetrieb selbsttätig
- bei Einschlagwinkeln größer einem bestimmten Lenkwinkel der gelenkten Räder einer Achse Freilauf sowohl des kurveninneren als auch des kurvenäußeren Rades ermöglicht,
- bei Einschlagwinkeln kleiner einem bestimmten Lenkwinkel der gelenkten Räder das schnellere kurvenäußere Rad vom Antrieb trennt und das kurveninnere Rad mit dem Antrieb verbindet,
- bei Geradeausfahrt beide Räder einer Achse synchron antreibt.

Erfindungsgemäß wird dies dadurch erreicht, daß die Abtriebswellen durch ihre Längsverschiebung während des Lenkeinschlages eine Rasteinrichtung betätigen, die die Spreizvorrichtung von einem bestimmten Lenkwinkel an in der Mittelstellung mit der geringsten Spreizung hält.

Die Ringkolben der Spreizvorrichtung werden ab einem bestimmten Lenkwinkel, z. B. größer ca. 35 Grad, in der kraftfreien Mittelstellung gehalten, so daß die Kupplungen offen sind. Der Ringkolben zum kurvenäußeren Rad ist bereits bei kleinen Lenkeinschlägen durch die passive Einrichtung in der kraftfreien Mittelstellung gehalten und ab einem bestimmten Lenkeinschlag sind beide Ringkolben zusätzlich durch eine Rasteinrichtung gehalten.

Der Ringkolben zum kurveninneren Rad dreht beim Übergang von Zug- zum Schubbetrieb selbsttätig in Richtung kraftfreier Mittelstellung und wird von der Rasteinrichtung in dieser festgehalten. Die passive Einrichtung ist bei Lenkwinkeln größer dem bestimmten Lenkwinkel kraftfrei, und erst wenn der Lenkwinkel wieder kleiner als der bestimmte Lenkwinkel ist, löst sich die lenkwinkelabhängige Rasteinrichtung wieder von den Ringkolben, und die passive Einrichtung, die eine begrenzte Verdrehung zwischen den beiden Ringkolben zuläßt, bestimmt deren Verdrehung.

Die Räder sind schwenkbar am starren Achsgehäuse befestigt. Bei Lenkeinschlag der Räder bewirken die Doppelkreuzgelenke eine Axialbewegung der Abtriebswellen. Durch diese vom Lenkeinschlag abhängige Axialbewegung der Abtriebswellen kann eine besonders genaue zuverlässige und kostengünstige automatische Betätigung der Rasteinrichtung erreicht werden. Ab einem bestimmten Lenkwinkel hält die Rasteinrichtung die Spreizvorrichtung in der Mittelstellung mit der geringsten Spreizung.

Gemäß Anspruch 2 besteht die Rasteinrichtung aus zwei Bauteilen mit je einer Schaltklaue. Der kurvenäußere Ringkolben erreicht bei kleinem Lenkeinschlag bereits die kraftfreie Mittelstellung und der kurveninnere Ringkolben erst ab großen Lenkeinschlag. Der Lenkeinschlag erzeugt am kurveninneren Rad einen größeren Schwenkwinkel als am kurvenäußeren Rad. Die mit dem kurveninneren Rad verbundene Abtriebswelle drückt bereits bei kleinem Lenkeinschlag die Schaltklaue der Rasteinrichtung in den Ringkolben der Kupplung zum kurvenäußeren Rad, so daß der Ringkolben nicht nur von der passiven Einrichtung in Mittelstellung gehalten ist und von der Spreizvorrichtung keine Schließkraft auf die Kupplung wirken kann. Die mit dem kurvenäußeren Rad verbundene Abtriebswelle drückt erst ab einem bestimmten Lenkeinschlag, z. B. ca. 35 Grad, die Schaltklaue der Rasteinrichtung gegen den Ringkolben der kurveninneren Kupplung, so daß der Ringkolben, wenn er von dem in den Schubbetrieb übergehenden kurveninneren Rad in Drehrichtung mitgeschleppt wird, beim Durchgang durch die Mittelstellung von der Rasteinrichtung gehalten wird. Zusätzlich wird erreicht, daß die vom kurvenäußeren Rad mit dem geringeren Lenkeinschlag betätigte Schaltklaue den kurveninneren Ringkolben bei Verringerung des Lenkeinschlags vor dem kurvenäußeren Ringkolben freigibt und die Verbindung zwischen kurveninnerem Rad und Antrieb wieder hergestellt wird, bevor das kurvenäußere Rad wieder mit dem Antrieb verbunden ist.

Gemäß Anspruch 3 wird erreicht, daß die Abtriebswellen, z. B. bei Lenkeinschlag im Stillstand, die Schaltklauen beschädigungsfrei gegen die Ringkolben drücken können, wenn die Schaltklauen nicht mit einer Nut im Ringkolben fluchten.

Gemäß Anspruch 4 wird erreicht, daß die Ringkolben sich reibungs- und folglich hysteresearm relativ zur Stützscheibe drehen.

Gemäß Anspruch 5 wird durch die Verdrehbarkeit der Außenlamellen leichtes Öffnen der Kupplung ermöglicht, wenn das zugehörige Rad schneller drehen möchte als vom Antrieb vorgegeben.

Gemäß Anspruch 6 löst sich der Eingriff der Schaltklauen selbsttätig, wenn die Schaltklauen nicht durch die Abtriebswellen in Nuten in den Ringkolben gedrückt sind.

Gemäß Anspruch 7 können die erfindungsgemäßen Freilaufkupplungen zusätzlich manuell in Neutralstellung geschaltet werden, so daß die Räder vom Antrieb getrennt bleiben. Die Freilaufkupplungen in einer von mehreren angetriebenen Achsen können eine schaltbare Kupplung zwischen den Achsen ersetzen. Sind die Räder im Zug- oder Schubbetrieb, wird eine manuell von außen vorgegebene Neutralstellung bei Lastwechsel bewirkt.

In den Zeichnungen sind Ausführungsbeispiele der Erfindung dargestellt:
- Fig. 1: Antriebsschema eines 4-Rad-getriebenen Kraftfahrzeugs,
- Fig. 2: erfindungsgemäße Freilaufkupplungen,
- Fig. 3a/b und 3c: Funktionsschema für Stützscheiben und Ringkolben,
- Fig. 4/4a: aktive Einrichtung zur Begrenzung der Verdrehung der Ringkolben-Riegelelemente,
- Fig. 5: Querschnitt der erfindungsgemäßen Ringkolben,
- Fig. 6: passive Einrichtung zur Begrenzung der Verdrehung der Ringkolben-Halbschalen.

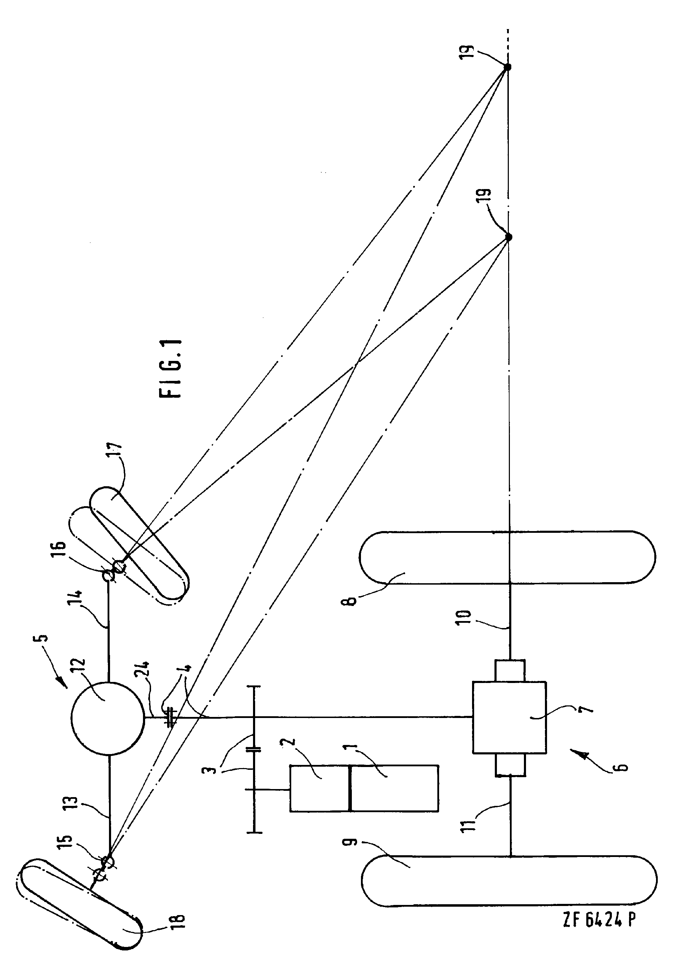

In Fig. 1 sind die geometrischen Verhältnisse am Beispiel zweier unterschiedlicher Lenkeinschläge für einen Allradantrieb dargestellt.

Eine Brennkraftmaschine 1 treibt über ein Schaltgetriebe 2 ein Stirnzahnradpaar 3 und eine zentrale Antriebswelle 4, eine gelenkte starre Vorderachse 5 und eine ungelenkte starre Hinterachse 6 an. Ein Kegelradausgleichsgetriebe 7 verbindet die Räder 8, 9 der Hinterachse 6 über Abtriebswellen 10, 11 mit der zentralen Antriebswelle 4. Die Vorderachse 5 enthält die erfindungsgemäßen Freilaufkupplungen 12, die die Abtriebswellen 13, 14 über die Doppelkreuzgelenke 15, 16 mit den gelenkten Vorderrädern 17, 18 verbinden. Die dünne unterbrochene Linie zeigt die Vorderräder mit geringem Lenkeinschlag, und die dicke durchgezogene Linie zeigt die Vorderräder mit großem Einschlag. Die Senkrechten auf den Ebenen der kurveninneren und kurvenäußeren Räder 17, 18 schneiden die Linie der Hinterachse 6 am innen- bzw. außenliegenden Momentanpol 19. In Abhängigkeit vom Lenkeinschlag ändert der Momentanpol seinen Abstand zur Mitte des Kegelradausgleichsgetriebes 7 der ungelenkten Hinterachse und zu den Vorderrädern. Der Abstand des Momentanpols 19 vom kurvenäußeren Rad 18 und damit dessen Bahnradius ist jedem Lenkeinschlag immer größer als der Abstand vom Momentanpol 19 zur Mitte des Kegelradausgleichsgetriebes 7 der Hinterachse 6. Bei kleinem Lenkeinschlag ist der Bahnradius - der Abstand des Momentanpols 19 vom kurveninneren Rad 17 - kleiner als der vom Momentanpol zum Kegelradausgleichsgetriebe 7 der Hinterachse 6. Bei großem Lenkeinschlag ist der Bahnradius - der Abstand des Momentanpols 19 vom kurveninneren Rad 17 - größer als der vom Momentanpol zum Kegelradausgleichsgetriebe 7 der Hinterachse 6. Bei einem bestimmten Grenzwinkel, der abhängig ist von der Spurweite und dem Radstand, und im allgemeinen ca. 35 Grad beträgt, ist der Abstand des Momentanpols 19 vom kurveninneren Vorderrad 17 gleich dem vom Momentanpol zur Mitte des Kegelradausgleichsgetriebes 7 der Hinterachse 6. Schwenkt das kurveninnere Rad 17 von einem kleineren Lenkeinschlag zu einem Lenkeinschlag größer als der bestimmte Grenzwinkel, so geht bei geeignetem Übersetzungsverhältnis zwischen Vorder- und Hinterachse das kurveninnere Rad 17 vom Zug- in den Schubbetrieb über und umgekehrt beim Zurückschwenken vom größeren zum kleineren Lenkeinschlag vom Schub- in den Zugbetrieb.

Befinden sich die Vorderräder 17, 18 bereits im Schubbetrieb, z. B. auf einer Gefällstrecke oder beim Bremsen, findet bei Zurückschwenken vom größeren zum kleineren Lenkeinschlag der Räder 17, 18 keine Umkehr von Schub nach Zug statt.

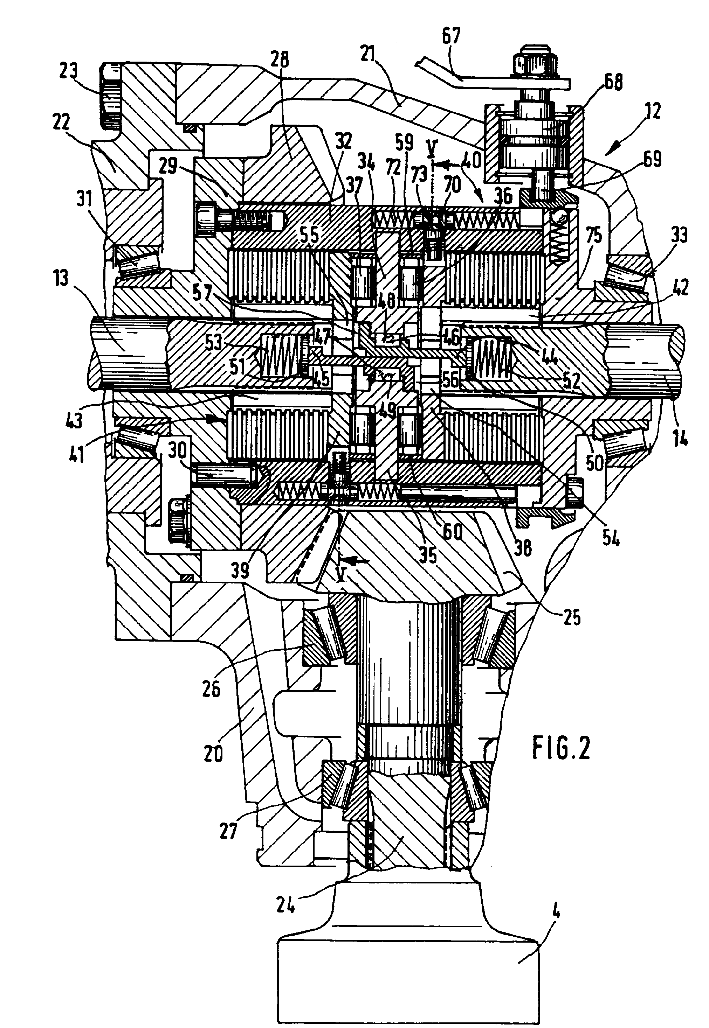

Fig. 2: Ein starres Achsgehäuse besteht aus zwei Achsbrücken 21, 22, die durch Schrauben 23 zusammengehalten sind. Eine Welle 24 ist von der Welle 4 angetrieben. Die Welle 24 ist mit einem Ritzel 25 versehen und mit zwei Kegelrollenlagern 26, 27 in einem Achstriebgehäuse 20 drehbar gelagert. Das Achstriebgehäuse 20 kann integraler Bestandteil der Achsbrücke 21 sein.

Das Ritzel 25 steht im Eingriff mit einer Verzahnung eines Tellerrades 28, das mit einem Deckel 29 des Gehäuses 32 der Freilaufkupplungen 12 verschraubt ist. Zylinderstifte 30 wirken als Verdrehsicherung zwischen Deckel 29 und Gehäuse 32. Der Gehäusedeckel 29 ist mit einem Kegelrollenlager 31 in der Achsbrücke 22 gehalten. Das Gehäuse 32 der Freilaufkupplungen 12 ist über ein weiteres Kegelrollenlager 33 in der Achsbrücke 21 gelagert. Der Gehäusedeckel 29 ist mit dem Gehäuse 32 der Freilaufkupplungen 12 verschraubt. Die Abtriebswelle 13 ist im Gehäusedeckel 29 und die Abtriebswelle 14 im Gehäuse 75 drehbar gelagert.

Eine Stützscheibe 34 ist mittels Zapfen 35 drehfest im Gehäuse 32 der Freilaufkupplung 12 gehalten.

Die Freilaufkupplungen 12 enthalten zwei Lamellenpakete 40, 41. Die Ringkolben 38, 39 sind drehbar relativ zur Stützscheibe 34 der Freilaufkupplungen 12 und liegen gegen Innenlamellen der Lamellenkupplungen 40, 41 an. Die Innenlamellen sind drehfest auf Innenlamellenträgern 42, 43, die drehfest mit den Abtriebswellen 13, 14 sind, montiert. Außenlamellen 77 der Lamellenkupplungen 40, 41 der Freilaufkupplungen 12 sind um einen Winkel von z. B. ca. 30 Grad drehbar im Gehäuse 32 der Freilaufkupplung 12 gehalten.

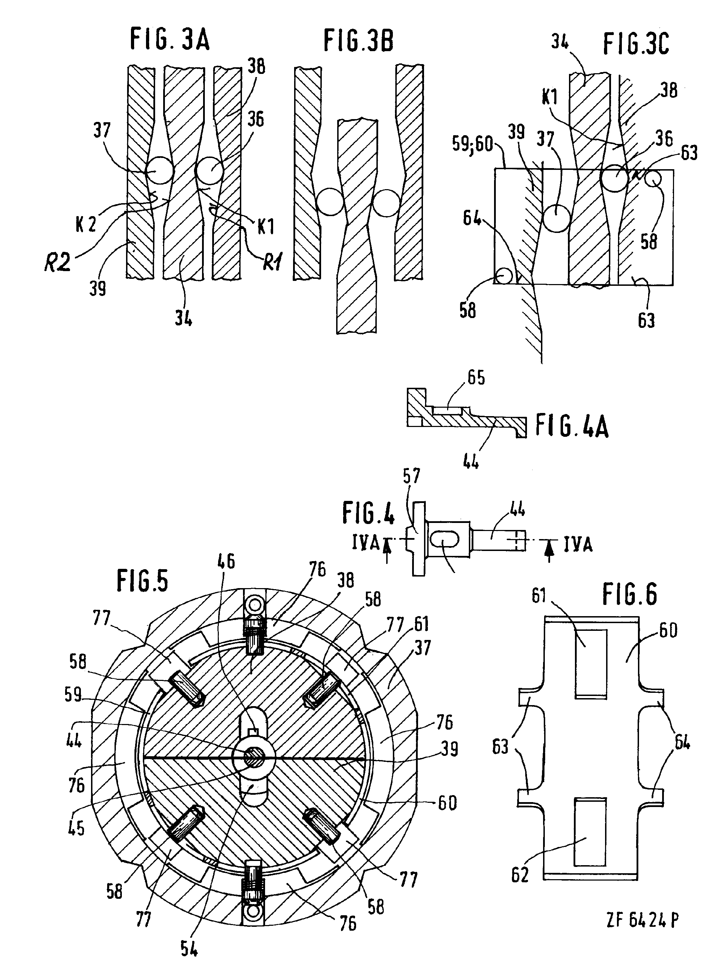

Fig. 3a: Die Stützscheibe 34 enthält Nockenflächen R1, R2. Koaxial zu beiden Seiten der Stützscheibe 34 sind Kraftübertragungselemente 36, 37, z. B. Rollen, angeordnet. Die Kraftübertragungselemente 36, 37 wirken über Ringkolben 38, 39 auf die vorgespannten Lamellenkupplungen 40, 41. Die Ringkolben 38, 39 sind auf der der Stützscheibe 34 zugewandten Seite mit Nockenflächen K1, K2 versehen.

Fig. 4, 4a, 5 zeigen Elemente einer aktiven schaltbaren Einrichtung zur Begrenzung der Verdrehung der Ringkolben 38, 39 bei großem Lenkeinschlag. Riegelelemente 44, 45 enthalten in Nuten 65 Paßfedern 46, 47, die axial verschieblich und verdrehfest in Nuten 48, 49 in der Stützscheibe 34 geführt sind. Die Riegelelemente 44, 45 liegen an Scheiben 50, 51 in den Abtriebswellen 13, 14. Die Scheiben 50, 51 sind von Druckfedern 52, 53 gegen Sicherungsringe (nicht dargestellt) in den Abtriebswellen 13, 14 gedrückt. Die Riegelelemente 44, 45 weisen schrägverzahnte Schaltklauen 56, 57 auf, die geeignet sind, in Nuten 54, 55 der Ringkolben 38, 39 einzugreifen.

Aus Symmetriegründen weisen die Ringkolben 38, 39 je zwei gegenüberliegende Nuten 54, 55 auf, so daß die Ringkolben austauschbar sind. Für die Funktion der Schaltklauen 56, 57 wäre jeweils nur eine Nut 54 oder 55 erforderlich.

Der Eingriff der Schaltklauen 56, 57 in die Nuten 54, 55 löst sich selbsttätig, wenn die Riegelelemente 44, 45 axial kraftfrei sind.

Am Umfang der Ringkolben 38, 39 sind radial vorstehende Zylinderstifte 58 eingefügt. Zwischen dem Umfang der Ringkolben 38, 39 und dem Gehäuse 32 der Freilaufkupplung 12 sind Bleche 59, 60 eingepaßt, die annähernd wie Halbschalen die Ringkolben 38, 39 und die Stützscheibe 34 umfassen.

Einteilig mit dem Gehäuse 32 sind Lamellenträger 76, in denen Außenlamellen 77 begrenzt drehbar gehalten sind.

Fig. 6: Die Bleche 59, 60 sind die passive Einrichtung zur Begrenzung der Verdrehung der Ringkolben 38, 39 bei kleinem und mittlerem Lenkeinschlag. Die Bleche 59, 60 enthalten zentrale Ausnehmungen 61, 62 und an beiden Seiten je zwei Anschläge 63, 64. Durch die zentralen Ausnehmungen 61, 62 greifen die Zapfen 35 der Stützscheibe 34 in das Gehäuse 32 der Freilaufkupplung 12 und zentrieren die Bleche 59, 60. Die Ausnehmungen 61, 62 erlauben Drehungen der Bleche 59, 60 relativ zur Stützscheibe 34. Zwischen die beiden Anschläge 63, 64 auf jeder Seite der Bleche 59, 60 greifen die Zylinderstifte 58 der Ringkolben 38, 39. Der Abstand der seitlichen Anschläge 63, 64 voneinander ist etwas größer als die Drehung, die die Ringkolben 38, 39 relativ zur Stützscheibe 34 zurücklegen können, bis die Nocken K1, K2, R1, R2 bzw. die Kraftübertragungselemente 36, 37 die Lamellenpakete 40, 41 geschlossen haben und eine weitere Verdrehung blockiert ist.

### Funktionsweise:

Die Drehzahl der Antriebswelle 4 wird von der Welle 24 über das Ritzel 25, das Tellerrad 28 und das Gehäuse 32 der Freilaufkupplungen 12 auf die Stützscheibe 34 übertragen.

Sind die Räder 17, 18 der Achse 5 weder im Zug- noch im Schubbetrieb, sind die Rollen 36, 37 und Ringkolben 38, 39 kraftfrei (Fig. 3a). Die Freilaufkupplungen 12 (Fig. 1) sind geöffnet.

### Geradeausfahrt im Zugbetrieb:

Fig. 3b: Bei Lastwechsel, z. B. beim Anfahren, dreht sich die Stützscheibe 34 relativ zu den Kraftübertragungselementen 36, 37 und den Ringkolben 38, 39, die aufgrund der Schleppwirkung der Innenlamellen relativ zum Gehäuse 32 zurückbleiben. Die Kraftübertragungselemente 36, 37 bewegen sich an den Rampen R1, R2 entlang und werden dabei von der Mittenebene der Stützscheibe 34 weg- und zu den Ringkolben 38, 39 hingedrückt. Die Kraftübertragungsfunktion der Stützscheibe 34 auf die Freilaufkupplungen 12 ist durch ein komplementäres Nockenprofil K1, K2 auf der den Kraftübertragungselementen 36, 37 zugewandten Ringkolbenoberflächen verstärkt. Die Ringkolben 38, 39 drücken die Lamellenpakete 40, 41 zusammen. Über die Abtriebswellen 13, 14 werden die Räder 17, 18 synchron angetrieben. Die Scheiben 50, 51 der Abtriebswellen 13, 14 haben größtmöglichen Abstand in axialer Richtung von der Mittenebene der Stützscheibe 34. Die Riegelelemente 44, 45 - von den Paßfedern 46, 47 in den Nuten 65, 66 geführt - drehen mit der Stützscheibe 34 und sind frei von Axialkräften von den Abtriebswellen 13, 14, so daß kein Eingriff in die Nuten 54, 55 der Ringkolben 38, 39 erfolgt.

### Kurvenfahrt mit kleinem Lenkeinschlag im Zugbetrieb:

Fig. 3c: Das kurvenäußere Rad 18 legt einen weiteren Weg zurück als alle anderen Räder 8, 9, 17 und erhöht die Drehzahl. Die Drehzahlerhöhung wird über die Abtriebswelle 14 und das zugehörige Lamellenpaket 40 an deren Ringkolben 38 weitergegeben. Der Ringkolben 38 dreht sich aus der Position gemäß Fig. 3b in Fahrtrichtung relativ zur Stützscheibe 34. Die Nocken bzw. profilierte Oberfläche K1 des Ringkolbens 38 wird frei von der Axialkomponente des Kraftübertragungselements 36. Die Außenlamellen 77 sind um einen Winkel von ca. 30° drehbar im Gehäuse 32 gehalten, so daß die Innenlamellen des Lamellenpakets 40 die Reibschlußverbindung zwischen den Lamellen verspannungsfrei lösen kann. Das kurvenäußere gelenkte Rad 18 läuft frei von der Stützscheibe 34.

Die am Umfang des kurvenäußeren Ringkolbens 38 radial vorstehenden Zylinderstifte 58 liegen an den Anschlägen 63 in Fahrtrichtung der Bleche 59, 60.

Da die kurveninnere Abtriebswelle 13 bei kleinem Lenkeinschlag im Zugbetrieb bleibt und weiter von der Welle 4 angetrieben wird, halten die Zylinderstifte 58 des Ringkolbens 39 die Bleche 59, 60 an den Anschlägen 64 relativ zur Stützscheibe 34 und der Ringkolben 38 kann sich mit den Zylinderstiften 58 in Fahrtrichtung nur um den Winkel zwischen den Anschlägen 63 drehen, so daß die Verdrehung des Ringkolbens 38 in Fahrtrichtung relativ zur Stützscheibe 34 nicht so weit geht, daß die Profilnocken R1, K1 an Stützscheibe 34 und Ringkolben 38 für die entgegengesetzte Fahrtrichtung über das Kraftübertragungselement 36 wieder zur Anlage kommt und das Lamellenpaket 40 wieder axial beaufschlagt und geschlossen würde. Der Ringkolben 38 bleibt in einer kraftfreien Mittelstellung und das Lamellenpaket 40 geöffnet.

Aus dem Lenkeinschlag der Räder 17, 18 resultiert durch die Doppelkreuzgelenke 15, 16 für beide Abtriebswellen 13, 14 Axialbewegung auf die Stützscheibe 34 zu. Da das kurveninnere Rad 17 größeren Lenkeinschlag aufweist als das kurvenäußere Rad 18, schiebt sich die kurveninnere Abtriebswelle 13 mehr zur Stützscheibe 34 hin als die kurvenäußere Abtriebswelle 14. Von der kurveninneren Abtriebswelle 13 wird das in der Stützscheibe 34 drehfest, aber axial verschieblich geführte Riegelelement 45 auf den kurvenäußeren Ringkolben 38 zugeschoben. Der kurvenäußere Ringkolben 38 hat seine Mittelstellung bereits erreicht, in der er durch die Anschläge 63 der Bleche 59, 60 in Fahrtrichtung gehalten wird. Die Kolbennuten 54, 55 des Ringkolbens 38 fluchten in der Mittelstellung mit der Schaltklaue 56 des Riegelelementes 45, so daß die Verschiebung der kurveninneren Abtriebswelle 13 den Eingriff der Schaltklaue 56 des Riegelelements 45 in die Nut 54 oder 55 bei einem Lenkeinschlag von z. B. 20° bewirken kann und der Ringkolben 38 mit der Stützscheibe 34 drehfest verbunden ist.

Die kurvenäußere Abtriebswelle 14 hat sich vergleichsweise weniger zur Stützscheibe 34 hinbewegt und das Riegelelement 44 wird über die federvorgespannte Scheibe 50 leicht gegen den kurveninneren Ringkolben 39 gedrückt. Da der kurveninnere Ringkolben 39 noch in seiner Zugposition ist, fluchten Kolbennuten 54, 55 und Schaltklaue 57 des Riegelelements 44 nicht und es findet kein Eingriff der Schaltklaue 57 statt.

### Kurvenfahrt mit großem Lenkeinschlag im Zugbetrieb:

Überschreitet der Lenkeinschlag des kurveninneren Rades 17 der Vorderachse einen bestimmten Grenzwinkel, der abhängig ist von der Fahrwerkgeometrie des Kraftfahrzeugs und im allgemeinen ca. 35° beträgt, legt auch das kurveninnere Rad 17 einen weiteren Weg zurück als die Mitte des Kegelradausgleichsgetriebes 7 der Hinterachse 6 und das Rad 17 dreht bei geeigneter Übersetzung Vorder-/Hinterachse, z. B. 1:1, schneller, als vom Antrieb 4 vorgegeben. Diese Drehzahlerhöhung wird über die Abtriebswelle 13 und das Lamellenpaket 41 übertragen und die profilierte Oberfläche K2 des Ringkolbens 39 für die kurveninnere Freilaufkupplung 12 löst sich vom Kraftübertragungselement 37 und der Ringkolben 39 dreht sich relativ zur Stützscheibe 34 ebenfalls in Fahrtrichtung. Die Zylinderstifte 58 des Ringkolbens 39 des kurveninneren Rades 17 lösen sich von den Anschlägen 64 der Bleche 59, 60, die sich mit den Zylinderstiften 58 gemeinsam in Fahrtrichtung drehen können.

Das Riegelelement 44 wird von der kurvenäußeren Abtriebswelle 14 zum Ringkolben 39 gedrückt.

Erreicht der Ringkolben 39 bei seiner Drehung relativ zur Stützscheibe 34 die Mittelstellung, kommt die Schaltklaue 57 des Riegelelements 44 in Überdeckung mit den Nuten 54, 55 des kurveninneren Ringkolbens 39 und das von der Feder 52 der kurvenäußeren Abtriebswelle 14 vorgespannte Riegelelement 44 greift mit seiner Schaltklaue 57 in die Nut 54 oder 55 des Kolbens 39 ein und hält ihn in Mittelstellung, in der die Kraftübertragungselemente 37 keine Axialkräfte von der Stützscheibe 34 auf den Ringkolben 39 und die Lamellenkupplung 41 übertragen können und somit auch das kurveninnere Rad 17 von der Antriebswelle 4 getrennt bleibt.

Die Begrenzung der Verdrehung der Ringkolben 38, 39 ist somit von der passiven Einrichtung - Halbschalen 59, 60 - auf die aktive, durch die Abtriebswellen 13, 14 schaltbare Einrichtung - Riegelelemente 44, 45 - übergegangen.

Die Stellung der Ringkolben 38, 39 zur Stützscheibe 34 entspricht dann der von Fig. 3a.

### Kurvenfahrt mit abnehmendem Lenkeinschlag im Zugbetrieb:

Die von dem kurvenäußeren Doppelkreuzgelenk 16 über die Abtriebswelle 14 beaufschlagte Schaltklaue 57 des Riegelelements 44 erfährt aufgrund des geringeren Lenkeinschlags des kurvenäußeren Rades 18 geringere axiale Verschiebung zum kurveninneren Ringkolben 39 hin als die von der kurveninneren Abtriebswelle 13 beaufschlagte Schaltklaue 56 des Riegelelements 45. Wird der Lenkeinschlag zurückgestellt, gibt die von der kurvenäußeren Abtriebswelle 14 beaufschlagte Schaltklaue 57 des Riegelelements 44 zuerst den Ringkolben 39 zum kurveninneren Rad 17 frei, so daß die Lamellenkupplung 41 zuerst wieder schließen kann und das kurveninnere Rad 17 ist für den Zugbetrieb bei kleinen Lenkeinschlägen mit der Antriebswelle 4 zuerst wieder verbunden.

### Schubbetrieb bei Geradeausfahrt:

Beide Ringkolben 38, 39 sind relativ zur Stützscheibe 34 in der Winkellage, die dem Zugbetrieb für die entgegengesetzte Fahrtrichtung entspricht.

### Schubbetrieb bei Kurvenfahrt:

Das kurvenäußere Rad 18 treibt über die zugehörige Abtriebswelle 14 und die Freilaufkupplungen 12 die Stützscheibe 34 an. Der kurvenäußere Ringkolben 39 kann nicht von der Stützscheibe 34 freikommen.

Das kurveninnere Rad 17 dreht langsamer und der zugehörige Ringkolben 39 dreht relativ zur Stützscheibe 34 entgegen der Drehrichtung bis in die kraftfreie Mittelstellung, in der der kurveninnere Ringkolben 39 durch die Anschläge 64 der Bleche 59, 60 gehalten wird.
Unabhängig vom Lenkeinschlag bleibt das kurvenäußere Rad 18 im Schubbetrieb und das kurveninnere Rad in kraftfreier Mittelstellung.

### Abschalten des Achsantriebs:

Zur manuellen Betätigung der Freilaufkupplungen 12 ist eine mechanische Kraftübertragungsvorrichtung vorgesehen, die aus einem außerhalb des Achsgehäuses 21 gelegenen Hebel 67, einem drehbaren Zapfen 68 mit exzentrischen Nocken 69 und einem im Gehäuse 32 der Freilaufkupplungen 12 verschieblichen Anschlag 70 besteht. Der Anschlag 70 wirkt entgegen Federn 72 auf Eingriffselemente 73, die in Nuten 74 am Umfang der Ringkolben 38, 39 eingreifen können und diese in kraftfreier Mittelstellung halten, so daß die Freilaufkupplungen 12 geöffnet bleiben. Die manuelle Betätigung kann erfolgen, während die Freilaufkupplungen 12 unter Last sind. Bei Lastwechsel schalten die Freilaufkupplungen 12 dann selbsttätig um.

### Bezugszeichen

- 1: Motor
- 2: Getriebe
- 3: Stirnradpaar
- 4: Antriebswelle
- 5: Vorderachse
- 6: Hinterachse
- 7: Kegelradausgleichsgetriebe
- 8: Hinterrad
- 9: Hinterrad
- 10: Abtriebswelle
- 11: Abtriebswelle
- 12: Freilaufkupplungen
- 13: Abtriebswelle
- 14: Abtriebswelle
- 15: Doppelkreuzgelenk
- 16: Doppelkreuzgelenk
- 17: Vorderrad
- 18: Vorderrad
- 19: Momentanpol
- 20: Achstriebgehäuse
- 21: Achsbrücke
- 22: Achsbrücke
- 23: Schrauben
- 24: Welle
- 25: Ritzel
- 26: Kegelrollenlager
- 27: Kegelrollenlager
- 28: Tellerrad
- 29: Deckel
- 30: Zylinderstifte
- 31: Kegelrollenlager
- 32: Gehäuse
- 33: Kegelrollenlager
- 34: Stützscheibe
- 35: Zapfen
- 36: Kraftübertragungselemente
- 37: Kraftübertragungselemente
- 38: Ringkolben
- 39: Ringkolben
- 40: Lamellenpaket
- 41: Lamellenpaket
- 42: Innenlamellenträger
- 43: Innenlamellenträger
- 44: Riegelelement
- 45: Riegelelement
- 46: Paßfeder
- 47: Paßfeder
- 48: Nut
- 49: Nut
- 50: Scheiben
- 51: Scheiben
- 52: Feder
- 53: Feder
- 54: Nut
- 55: Nut
- 56: Schaltklaue
- 57: Schaltklaue
- 58: Zylinderstifte
- 59: Blech
- 60: Blech
- 61: Ausnehmung
- 62: Ausnehmung
- 63: Anschläge
- 64: Anschläge
- 65: Nut
- 66: -
- 67: Hebel
- 68: Zapfen
- 69: Nocken
- 70: Anschlag
- 71: Bolzen
- 72: Feder
- 73: Eingriffselement
- 74: Nuten
- 75: Gehäuse
- 76: Außenlamellenträger
- 77: Außenlamellen

## Patentansprüche

1. Angetriebene, starre und gelenkte Achse mit zwei koaxial im Achsgehäuse (21, 22) gelagerten Antriebswellen (13, 14), die Räder (17, 18) über Doppelkreuzgelenke (15, 16) antreiben, und die drehfest und axial ver-. schiebbar in jeweils einen inneren Lamellenträger (42, 43) mit jeweils zugehörigem Lamellenpaket (40, 41) eingreifen, dessen äußere Lamellen trieblich über ein Gehäuse (32) mit einem Antrieb (4) verbunden sind, mit einer zwischen den Lamellenpaketen (40, 41) angeordneten Spreizvorrichtung (34, 38, 39), bestehend aus einem fest mit dem Gehäuse (32) verbundenen Stützelement (34) mit in Drehrichtung verlaufenden ersten Rampen (R1, R2), die mit zweiten Rampen (K1, K2) an Ringkolben (38, 39) zusammenwirken, die auf die Lamellenpakete (40, 41) drücken, und mit einer Einrichtung (59, 60), die nur eine begrenzte Verdrehung zwischen den beiden Ringkolben (38, 39) zuläßt, dadurch **gekennzeichnet**, daß die Abtriebswellen (13, 14) durch ihre Längsverschiebung während des Lenkeinschlags eine Rasteinrichtung betätigen, die die Spreizvorrichtung von einem bestimmten Lenkeinschlag an in der Mittelstellung mit der geringsten Spreizung hält.

2. Achse nach Anspruch 1, dadurch **gekennzeichnet**, daß die Rasteinrichtung zwei Riegelelemente (44, 45) hat, die axial verschieblich und drehfest mit dem Stützelement (34) verbunden sind, dieses axial durchdringen und jeweils mit dem einen Ringkolben (38 oder 39) über Schaltklauen (56 oder 57) zusammenwirken, wobei sie jeweils durch die Abtriebswelle (13 oder 14) auf der gegenüberliegenden Seite des Stützelements betätigt werden.

3. Achse nach Anspruch 2, dadurch **gekennzeichnet**, daß die Abtriebswellen (13, 14) über Federelemente (52, 53) auf die Riegelelemente (44, 45) wirken.

4. Achse nach Anspruch 1, 2 oder 3, dadurch **gekennzeichnet**, daß das Stützelement (34) eine Stützscheibe ist und daß zwischen den Rampen der Stützscheibe (34) und den Rampen der Ringkolben (38, 39) Wälzkörper (36, 37) angeordnet sind.

5. Achse nach einem der vorangehenden Ansprüche, dadurch **gekennzeichnet**, daß die Außenlamellen der Lamellenpakete (40, 41) um einen begrenzten Winkel drehbar mit dem Antrieb (4) verbunden sind.

6. Achse nach Anspruch 2, dadurch **gekennzeichnet**, daß die Schaltklauen (56, 57) Schrägverzahnt sind und in schrägverzahnte Nuten (54, 55) in den Ringkolben (38, 39) eingreifen können.

7. Achse nach einem der vorangehenden Ansprüche, dadurch **gekennzeichnet**, daß die Spreizeinrichtung durch eine von außen betätigbare Schalteinrichtung in Mittelstellung gehalten werden kann.

## Claims

1. A driven, rigid and steered axle which includes two input shafts (13, 14) which are coaxially supported in the axle housing (21, 22) and drive wheels (17, 18) via double-crossed joints (15, 16) and which non-torsionally and axially movably engage in respective internal disc carriers (42, 43) which engaged with respectively appertaining disc sets (40, 41) and whose external discs are operatively connected with a drive (4) via a housing (32), an expansion device (34, 38, 39) situated between said disc sets (40, 41) and consisting of a supporting element (34) firmly connected with said housing (32), first ramps (R1, R2) extending in direction of rotation and co-acting with second ramps (K1, K2) on annular pistons (38, 39),
**characterized** in that said output shafts (13, 14) actuate, by virtue of their longitudinal displacement under the steering angle, a snap-in catch which, starting froma specific steering angle, holds the expansion neutral position with minimal expansion.

2. An axle according to claim 1,
**characterized** in that said snap-in catch has two locking elements (44, 45) which are axially movable and non-torsionally connected with said supporting element (34) axially penetrate it and respectively co-act with one annular piston (38 or 39) via shift teeth (56 or 57), they being respectively actuated by said output shaft (13, or 14) on the opposite side of said supporting element.

3. An axle according to claim 2,
**characterized** in that said output shafts (13, 14) act upon said locking elements (44, 45) via spring elements (52, 53).

4. An axle according to claim 1, 2 or 3,
**characterized** in that said supporting element (34) is a supporting disc and roller bodies (36, 37) are situated between the ramps of said supporting disc (34) and the ramps of said annular pistons (38, 39).

5. An axle according to one of the above claims,
**characterized** in that the external discs of said disc sets (40, 41) are rotatably connected with said drive (4) around a limited angle.

6. An axle according to claim 2,
**characterized** in that shift teeth (56, 57) are helically cut and can engage in helically cut grooves (54, 55) in said annular pistons (38, 39).

7. An axle according to one of the above claims,
**characterized** in that said expansion device can be held in neutral position by a shifting device actuatable from outside.

## Revendications

1. Pont entraîné, rigide et directeur, avec deux arbres d'entrée (13, 14) co-axialement montés dans le carter de pont (21, 22), entraînant les roues (17, 18) au moyen des joint articulés doubles (15, 16), engrènant rotativement fixe et axialement déplaçable avec un porte-disques intérieur (42, 43) avec le jeu multidisques lui appartenant (40, 41), dont les disques extérieurs sont liés avec une entrée (4), un carter (32), avec un dispositif d'écartement (34, 38, 39) placé entre les jeux multidisques (40, 41), formé d'un élément de support (34) fixé au carter (32), muni des premières rampes (R1, R2) arrangées dans le sens de rotation, coopérant avec les deuxièmes rampes (K1, K2) sur le piston annulaire (38, 39), appuyant sur le jeu multidisques (40, 41) avec un dispositif (59, 60) qui n'admet qu'une rotation limitée entre les deux pistons annulaires (38, 39), **caractérisé** en ce que les arbres de sortie (13, 14) actionnent par son déplacement longitudinal pendant le braquage un dispositif de cran d'arrêt, retenant le dispositif d'écartement dans la position centrée à l'écartement le plus faible à partir d'un certain point de braquage.

2. Un pont selon la revendication 1,
**caractérisé** en ce que le dispositif d'arrêt dispose de 2 éléments de verrou (44, 45), liés avec l'élément de support (34) de manière axialement déplaçable et fixés en sens de rotation, pénétrant cet élément axialement et coopérant à travers des crabots de changement (56 ou 57) individuellement avec un piston annulaire (38 ou 39), chacun actionné par l'arbre de sortie (13 ou 14) sur le côté faisant face de l'élément de support.

3. Un pont selon la revendication 2,
**caractérisé** en ce que les arbres de sortie (13, 14) agissent à travers des éléments de ressort (52, 53) sur les éléments de verrou (44, 45).

4. Un pont selon les revendications 1, 2 ou 3,
**caractérisé** en ce que l'élément de support (34) est formé d'une rondelle de support et entre les rampes de la rondelle de butée (34) et les rampes des pistons annulaires (38, 39), sont disposés des galets (36, 37).

5. Un pont selon une des précédentes revendications,
**caractérisé** en ce que les disques extérieurs du jeu multidisques (40, 41) sont liés par un angle limité rotatif avec l'entrée (4).

6. Un pont selon la revendication 2,
**caractérisé** en ce que les crabots (56, 57) sont à denture hélicoidale et engrènent dans les encoches à denture hélicoidale (54, 55) dans le piston annulaire.

7. Un pont selon une des précédentes revendications,
**caractérisé** en ce que le dispositif d'écartement peut-être retenu par un mécanisme de couplage extérieur enclenchable en position centrée.
